# EUROPEAN PATENT APPLICATION

(11) **EP 4 606 703 A1**
(43) Date of publication of application: **27.08.2025**
(21) Application number: 24215423.5
(22) Date of filing: 26.11.2024
(51) Int. Cl.: B64C 27/605

(54) **ROTOR ASSEMBLIES AND AIR MOBILITY VEHICLE INCLUDING SAME**

(30) Priority: 20.02.2024 KR 20240024319
(71) Applicant: Hyundai Motor Company, Seoul 06797 (KR); Kia Corporation, Seocho-gu Seoul 06797 (KR)
(72) Inventor: CHOI, Jae Young, Seoul (KR)
(74) Representative: Viering, Jentschura & Partner mbB Patent- und Rechtsanwälte

(57) **Abstract**

A rotor assembly (10) includes a main shaft (100); at least one blade (200) disposed along a circumference of the main shaft; a swash plate unit (300) disposed to penetrate the main shaft, connected to at least one of the blades, and configured to move along the main shaft; and a drive unit (420) configured to control a position of the swash plate unit (300), wherein the swash plate unit and the drive unit are connected to each other through a non-back drive part (500) which does not allow force to be transferred to the drive unit.

## Description

### CROSS-REFERENCE TO RELATED APPLICATIONS

This application claims benefit of priority to Korean Patent Application No. 10-2024-0024319 filed on February 20, 2024 in the Korean Intellectual Property Office, the disclosure of which is incorporated herein by reference in its entirety.

### TECHNICAL FIELD

The present disclosure relates to a rotor assembly and air mobility including the same.

### BACKGROUND

The air mobility industry has attracted attention as a future transportation method which may solve problems associated with urban population growth, road traffic congestion, and environmental problems.

Air mobility may provide a new means of transportation within urban areas using an electric vertical takeoff and landing aircraft (eVTOL).

Differently from a general aircraft, an eVTOL may have vertical takeoff and landing capabilities, such that an eVTOL may safely takeoff and land even within urban areas without using a runway, and may provide convenient accessibility as a passenger car/vehicle.

Also, an eVTOL may be environmentally friendly by using electrical energy.

The flight of the eVTOL may be controlled using collective pitch control and cyclic pitch control over rotor blades.

### SUMMARY

The following summary presents a simplified summary of certain features. The summary is not an extensive overview and is not intended to identify key or critical elements.

Systems, apparatuses, and methods are described for a rotor assembly and/or mobility device comprising the same. A rotor assembly may comprise a main shaft; at least one blade disposed along a side of the main shaft; at least one swash plate disposed to be penetrated by the main shaft, connected to at least one of the at least one blade, and configured to move along the main shaft; and a drive configured to control a position of the swash plate. The at least one swash plate and the drive may be connected to each other by a non-back drive part configured to not transfer force from the swash plate to the drive.

A rotor assembly may also, or alternatively, comprise a main shaft configured to rotate around a first axis; blades disposed along a side of the main shaft, wherein each blade of the blades is configured to: rotate around the first axis based on rotation of the main shaft, and rotate around a second axis, of the blade, different from the first axis; a drive configured to provide power to cause the blades to rotate around the second axis; and at least one swash plate connecting the blades to the drive and configured to move along the main shaft. The drive may be connected to at least one of the at least one swash plate via a non-back drive part configured to not transfer force from the at least one of the at least one swash plate to the drive.

An air mobility device may comprise any one of the rotor assemblies described herein.

These and other features and advantages are described in greater detail below.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective diagram illustrating an aircraft including a rotor assembly according to an example of the present disclosure;
FIG. 2 is a diagram illustrating a rotor assembly according to an example of the present disclosure;
FIG. 3 is a diagram illustrating a rotor assembly including a reverse input prevention unit according to an example of the present disclosure;
FIGS. 4A and 4B are diagrams illustrating the use of a rotor assembly in a first control system according to an example of the present disclosure;
FIGS. 5A and 5B are diagrams illustrating the use of a rotor assembly in a second control system according to an example of the present disclosure; and
FIG. 6 is a diagram illustrating a rotor assembly according to another example of the present disclosure.

### DETAILED DESCRIPTION

Hereinafter, examples of the present disclosure will be described with reference to the attached drawings. Redundant descriptions and detailed descriptions of known functions and elements which may unnecessarily obscure the gist of the present subject matter will be omitted. In the drawings, components having similar functions and application will be indicated by same reference numerals.

The terms "first," "second," and the like may be used to distinguish one element from the other, and may not limit a sequence and/or an importance, or others, in relation to the elements. In some cases, a first element may be referred to as a second element, and similarly, a second element may be referred to as a first element without departing from the scope of right of the examples.

An expression used in the singular encompasses the expression of the plural, unless it has a clearly different meaning in the context. The terms, "include," "comprise," "has," or the like of the description are used to indicate the presence of features, numbers, steps, operations, elements, portions or combination thereof, and do not exclude the possibilities of combination or addition of one or more features, numbers, steps, operations, elements, portions or combination thereof.

Unless otherwise indicated, the entirety of terms used herein, including technical or scientific terms, have the same meanings as those generally understood by those with ordinary knowledge in the field of art to which the present declaration belongs. Such terms as those defined in a generally used dictionary are to be interpreted as having meanings equal to the contextual meanings in the relevant field of art, and are not to be interpreted as having ideal or excessively formal meanings unless clearly defined as having such in the present application.

The term "air mobility" in examples may refer to a mobility vehicle that can move by flying in the air. That is, "air mobility" may refer to a helicopter, a drone, or a fixed-wing airplane, and may also include vehicles moving on the ground using wheels and flying with wheels lifted from the ground.

Also, or alternatively, an air mobility may include a manned air mobility and/or an unmanned air mobility. The manned air mobility may include an aircraft controlled/controllable by a pilot and/or an aircraft operating autonomously and/or remotely.

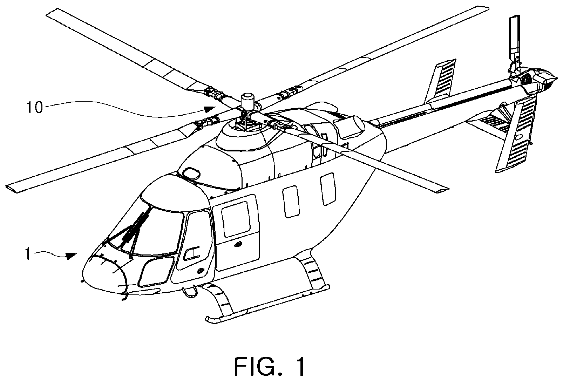

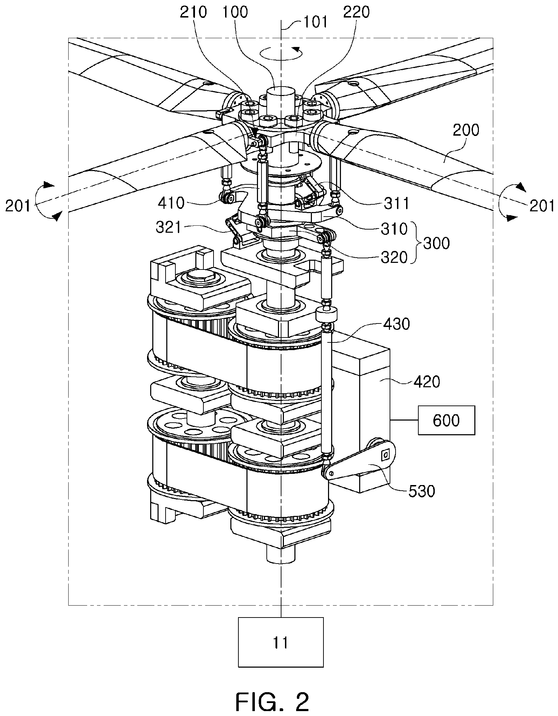

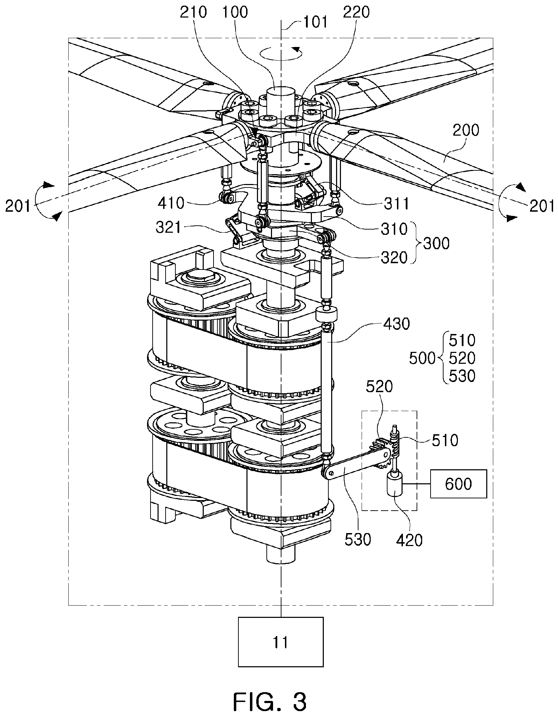

FIG. 1 is a perspective diagram illustrating an aircraft including a rotor assembly according to an example. FIG. 2 is a diagram illustrating a rotor assembly according to an example. FIG. 3 is a diagram illustrating a rotor assembly including a reverse input prevention unit according to an example.

Referring to FIG. 1, an air mobility according to an example may include a rotor assembly 10 moving the aircraft 1 by generating lift by rotating the blades 200.

Referring to FIGS. 1 and 3, the rotor assembly 10 may include a main shaft 100, a blade 200, a swash plate unit 300 (e.g., one or more swash plates), a drive unit 420 (e.g., a drive), and a non-back drive part 500.

One side of the main shaft 100 may be connected to the aircraft 1, and may rotate by receiving driving force from the main drive unit 11 disposed on the aircraft 1. The main shaft 100 may rotate around a first axis 101.

The plurality of blades 200 disposed along a side (e.g., circumference) may be disposed on the other side of the main shaft 100.

The other side of the main shaft 100 may include a blade hub 220, the main shaft 100 and the blade 200 may be coupled to each other through the blade hub 220, and the blade 200 may rotate together with the main shaft 100 through the blade hub 220.

The blade 200 may be coupled to the blade hub 220 to rotate about the shaft in the length direction (longitudinal direction) of the blade 200. The shaft of the blade 200 in the length direction may be referred to as a second axis 201.

Rotating the blade 200 in the direction of the second axis 201 may be referred to as pitching.

The blade 200 may have an aerofoil-shaped cross-section, may be connected to the main shaft 100, may rotate together with the main shaft 100 which rotates around the first axis 101, and/or may generate lift to the aircraft 1.

Also, by adjusting the pitching of the blade 200, a flight direction and/or a flight speed of the aircraft 1 may be adjusted.

The swash plate unit 300 may have a hollow shape, and the main shaft 100 may penetrate the hollow region of the swash plate unit 300.

The swash plate unit 300 may include a first plate 310 and a second plate 320.

The first plate 310 may rotate by being connected to the blade 200, and the second plate 320 may be disposed below the first plate 310, may support the first plate 310, and/or may not rotate.

That is, the first plate 310 may rotate together with the main shaft 100, while the second plate 320 may remain stationary.

The first plate 310 may be connected to the blade 200 and the blade link 410.

One side of the blade link 410 may be connected to the first plate 310, and the other side may be connected to the blade 200.

The blade link 410 may be connected to a protrusion 210 protruding from an external side of the blade 200.

The blade link 410 may be connected to the protrusion 210 of the blade 200, such that the blade link 410 may be spaced apart from the second axis 201 disposed in the blade 200 by a predetermined distance and may be connected to the blade 200.

As the second axis 201 is spaced apart from the blade link 410 (e.g., the blade link 410 is not on the second axis 201) and the blade 200 and the blade link 410 are connected to each other, the first plate 310 may be lifted, such that the blade 200 may rotate around the second axis 201 by the blade link 410 which moves up together with the first plate 310, and the pitch of the blade 200 may be adjusted.

The blade link 410 may be disposed to correspond to the number of blades 200, and the blade link 410 may be disposed on and connected to the first plate 310 to correspond to the arrangement of the plurality of blades 200.

Also, or alternatively, the blade hub 220 and the first plate 310 may be connected to a first auxiliary link 311.

The first auxiliary link 311 may change in response to changes in a distance between the blade 200 and the first plate 310, and/or may synchronize rotations of the blade 200 and/or the blade hub 220 and the first plate 310.

For example, the first auxiliary link 311 may include two links connected to perform relative rotation.

If the swash plate unit 300 moves up and the distance between the first plate 310 and the blade 200 reduces, an angle between the two links included in the first auxiliary link 311 may decrease, and the first plate 310 and the blade 200 may be connected to each other.

Also, or alternatively, if the swash plate unit 300 moves down and the distance between the first plate 310 and the blade 200 increases, the angle between the two links included in the first auxiliary link 311 may increase and the first plate 310 and the blade 200 may be connected to each other.

Accordingly, the first plate 310 and the blade 200 may rotate at the same speed regardless of a level of the swash plate unit 300, and the pitch of the blade 200 may change by the blade link 410 depending on the level of the swash plate unit 300.

The second plate 320 may include a second auxiliary link 321 connected to a non-rotating portion separated from the main shaft 100 and fixed without rotating among the components of the aircraft 1 and/or the rotor assembly (e.g., the main shaft 100 and/or other components of the rotor assembly are configured to rotate relative to the non-rotating portion).

The second auxiliary link 321 may support the first plate 310 to not rotate even if the first plate 310 rotates.

For example, the second auxiliary link 321 may include two links connected to perform relative rotation.

If the swash plate unit 300 moves up, the angle between the two links included in the second auxiliary link 321 may increases, and the second plate 320 and aircraft 1 and/or the non-rotating portion may be connected to each other.

If the swash plate unit 300 moves down, the angle between the two links included in the second auxiliary link 321 may increase, and the level of the second plate 320 may be adjusted together with the first plate 310 while supporting the first plate 310.

The first auxiliary link 311 and the second auxiliary link 321 may support the first plate 310 which rotates and the second plate 320 which does not rotate in an auxiliary manner, such that load on the blade link 410, which connects the first plate 310 to blade 200, and the control link 430, which connects the second plate 320 to drive unit 420 may be reduced.

The drive unit 420 may be connected to the second plate 320 of the swash plate unit 300, and may adjust the level of the second plate 320.

The drive unit 420 may be connected to the second plate 320 of the swash plate unit 300 and the control link 430, and by moving the control link 430 up and/or down, the level of the swash plate unit 300 including the second plate 320 and the first plate 310 supported by the second plate 320 may be adjusted.

The drive unit 420 may be configured as a rotary actuator and/or a linear actuator.

For example, the drive unit 420 may be configured as a rotary actuator, such as a servo motor, stepper motor, and/or geared motor, and/or an electric linear actuator such as a ball screw actuator, linear motor, and/or linear spring actuator.

The non-back drive part 500 may be disposed between the control link 430 and the drive unit 420.

The non-back drive part 500 may be configured to allow driving force generated by the drive unit 420 to be transferred to the swash plate unit 300 through the control link 430, and to prevent external force applied to/experience by the second plate 320 and the control link 430 from being transferred to the drive unit 420.

Referring to FIG. 3, the non-back drive part 500 according to an example may include a worm 510 disposed on a rotational shaft of the drive unit 420, and a worm gear 520 having a shape corresponding to the worm 510 and connected to the control link 430.

The worm 510 may have a cylindrical shape having a spiral groove and may be disposed on a rotational shaft of the drive unit 420.

The worm gear 520 may have a shape corresponding to a spiral groove of the worm 510, may be disposed such that the worm 510 may be engaged with the worm gear 520, and accordingly, as the worm 510 rotates, the worm gear 520 may rotate.

The rotational shaft of the worm 510 and the rotational shaft of the worm gear 520 may have structures approximately perpendicular to each other, and threads of the worm 510 and threads of the worm gear 520 may be oriented in opposite directions.

In the case in which the worm 510 rotates the worm gear 520, the threads of the worm 510 may rotate the worm gear 520 while moving along the threads of the worm gear 520.

In the case in which the worm gear 520 rotates the worm 510, the threads of the worm gear 520 may move in the opposite direction of the threads of the worm 510, such that the worm 510 may not rotate.

The worm gear 520 may be connected to the control link 430 through a gear link 530 having a predetermined length.

The gear link 530 may protrude and extend to an external side of the worm gear 520, one side may be coupled to the worm gear 520, and the other side may be connected to the control link 430.

By connecting the worm gear 520 to the control link 430 through the gear link 530, as compared to the case in which the worm gear 520 and the control link 430 are directly connected to each other, changes in the control link 430 may increase as compared to the rotation of the worm 510 rotating by being coupled to drive unit 420.

The control unit 600 may be implemented by a nonvolatile memory (not illustrated) configured to store data regarding an algorithm configured to control operations of a component for adjusting the pitch angle of the blade and/or software instructions for reproducing the algorithm, and a processor configured to perform operations described below using data stored in the memory (not illustrated).

The memory and the processor may be implemented as individual chips. Alternatively, the memory and the processor may be implemented in an integrated single. The processor may include one or more processors.

Also, or alternatively, the control unit 600 may transmit data to and receive data from the drive unit 420 using a communication means such as Ethernet, media oriented systems transport (MOST), Flexray, Internet, long term evolution (LTE), 5th generation mobile telecommunication (5G) Wi-Fi, Bluetooth, near field communication (NFC), Zigbee^{®}, radio frequency (RF), or the like.

The control unit 600 may operate the drive unit 420 according to operation from a user and/or a predetermined command.

For example, the control unit 600 may control the pitch angle of the blade 200 according to manipulation of a handle disposed on the aircraft 1 by a user, such that the drive unit 420 may be controlled for the aircraft to move up, move down, move forward, move reverse, change a direction and/or hover.

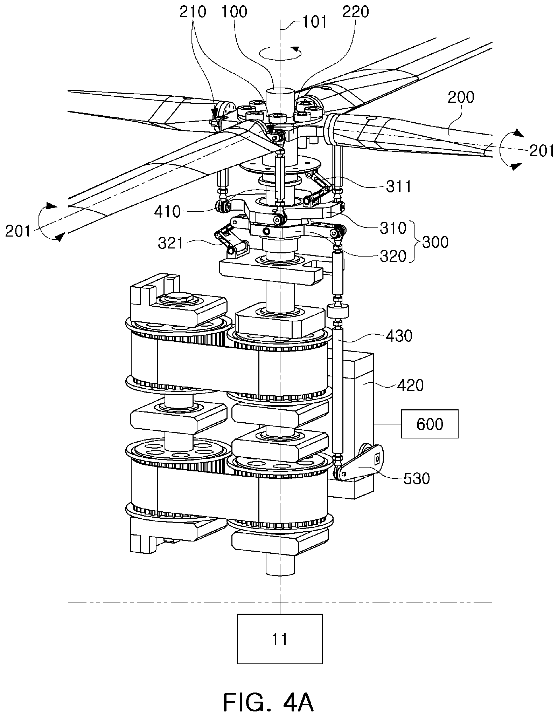

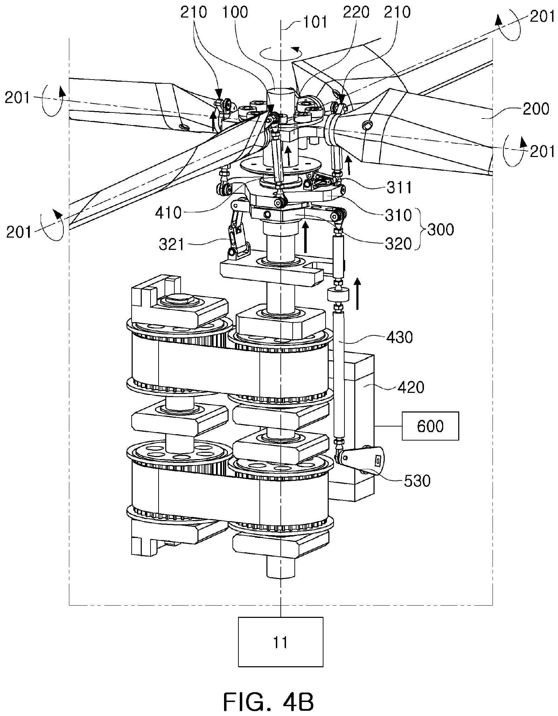

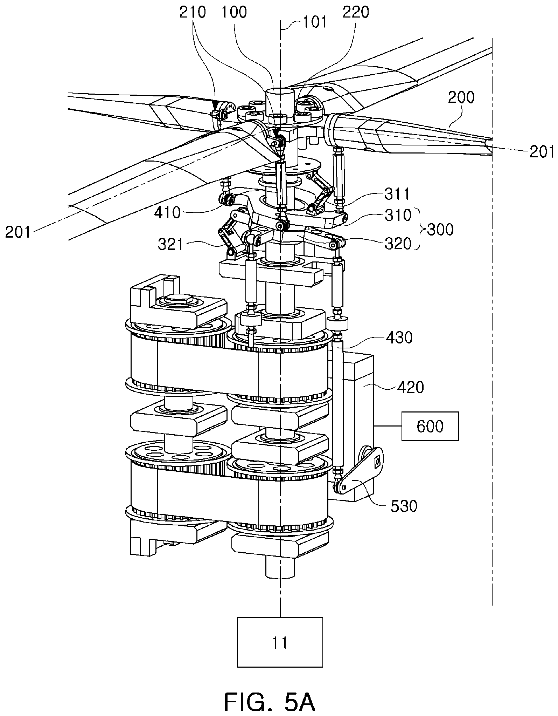

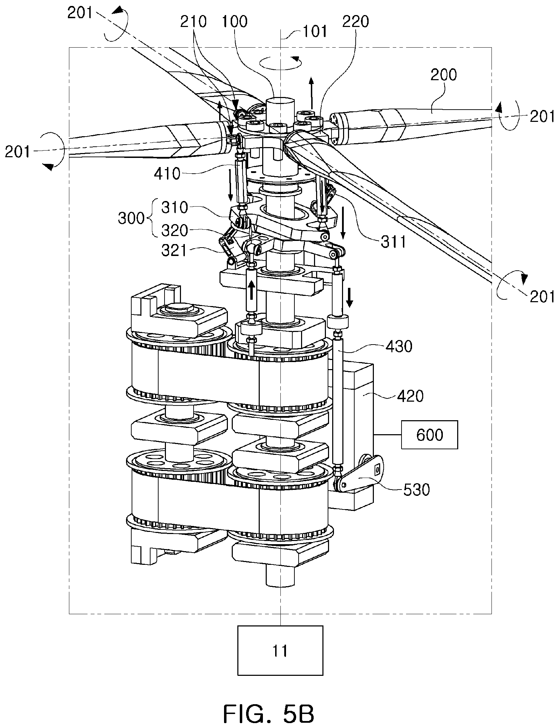

FIGS. 4A and 4B are diagrams illustrating the use of a rotor assembly 10 in a first control system according to an example. FIGS. 5A and 5B are diagrams illustrating the use of a rotor assembly 10 in a second control system according to an example.

Referring to FIGS. 4A, 4B, 5A, and 5C, in an aircraft including a blade 200, a system for adjusting a pitch angle of the blade 200 may include a collective pitch control system and a cyclic pitch control system.

Referring to FIGS. 4A and 4B, the collective pitch control system may be configured as a system which may simultaneously change the pitch angles of the entirety of blades 200 of the rotor assembly 10.

The collective pitch control system may not change the angle of the swash plate unit 300 and may only adjusts the level, thereby adjusting the pitch angle of the entirety of the blades 200 of the rotor assembly 10 and adjusting the total thrust.

Referring to FIGS. 5A and 5B, the cyclic pitch control system may be configured as a system which may individually control the pitch angles of the entirety of blades 200 of the rotor assembly 10. The cyclic pitch control system may allow the aircraft to fly forward, backward, and left and right.

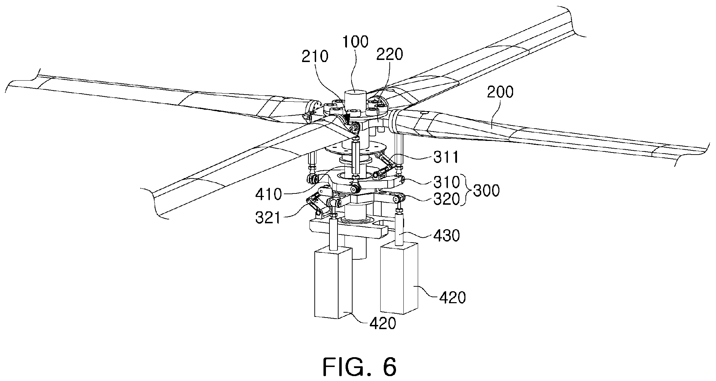

The cyclic pitch control system may adjust the level and also the angle of the swash plate unit 300. Referring to FIG. 6, the cyclic pitch control system may include two or more drive units 420 coupled to the swash plate unit 300 to adjust the angle of the swash plate unit 300, and the swash plate unit 300 may be connected to the main shaft 100 and may move up and down together with the main shaft 100 to adjust the angle.

If the swash plate unit 300 is tilted, a distance between the first plate 310 and the blade 200 may change as the main shaft 100 rotates, and the pitch angle of the blade 200 may repeatedly change as the main shaft 100 rotates by the blade link 410 connecting the first plate 310 to the blade 200.

To distinguish between the collective pitch control system and the cyclic pitch control system, the collective pitch control system may be referred to as a first control system, and the cyclic pitch control system may be referred to as a second control system.

FIGS. 1 to 3 are diagrams illustrating the rotor assembly 10 which may be controlled by a first control system.

FIG. 6 is a diagram illustrating a rotor assembly 10 according to another example.

FIG. 6 illustrates air mobility controlled by a second control system according to another example, and the description of the components overlapping the components in the first control system described above with reference to FIGS. 1 to 3 may be replaced with the description above, and the components different from those of the first control system will be mainly described.

Referring to FIG. 6, the second control system may include a plurality of drive unit 420, and a plurality of control link 430 connecting the plurality of drive unit 420 and the second plate 320 to each other.

The control unit 600 may change a position of the plurality of control link 430 by controlling the plurality of drive unit 420, thereby tilting the swash plate unit 300 and individually changing angles of the blades 200.

For example, the first control system may only adjust a level of the swash plate unit 300 along a direction of the main shaft 100. The first control system may allow the swash plate unit 300 to move up and/or move down while maintaining equilibrium, and a distance between the blade 200 and the swash plate unit 300 may change constantly, such that pitch angles of the entirety of the plurality of blades 200 may move constantly.

Differently from the first control system, the second control system may adjust a level and/or a slope of the swash plate unit.

For example, in the second control system, one drive unit 420 may control the control link 430 to move up, and the other drive unit 420 may control the control link 430 to move up and/or move down less. The second control system may control the swash plate unit 300 to tilt in one direction.

If levels of the plurality of control link 430 are adjusted differently, the second plate 320 connected to the other side of the control link 430 may be tilted.

If the second plate 320 is tilted, the second plate 320 may be supported by the second plate 320, and the first plate 310 rotating by being connected to the blade 200 may rotate in a tilted state together with the second plate 320.

If the first plate 310 rotates in an inclined state, one end of the blade link 410 may be connected to the first plate 310, and the other end may be connected to a portion of the blade 200, such that the level of one end may change with the first plate 310, whereas the blade 200 may be coupled to the main shaft 100 through the blade hub 220 and the level thereof may be maintained to be constant.

The level of the connection portion of the blade 200 and the blade link 410, spaced apart from and disposed on the second axis 201 which is the rotational shaft of the blade 200, may change with the first plate 310, such that the pitch angle of the blade 200 may be adjusted.

The rotor assembly according to an example may include a non-back drive part 500, such that the pitch angle of the blade 200 may be maintained without a motor output if the pitch angle of the blade 200 is not changed.

Also, or alternatively, in a circumstance in which a failure occurs in the drive unit 420 for adjusting the pitch angle, the pitch angle of the blade 200 may be maintained to be constant and may not change, such that thrust by the blade 200 may be maintained to be constant, which may improve stability.

The methods according to the present disclosure may be implemented in the form of program instructions executed through various computer means and recorded on a computer-readable medium. A computer-readable medium may include program instructions, data files, data structures alone or in combination. Program instructions recorded on a computer-readable medium may be specially designed and constructed for the present disclosure or may be well-known and usable by a person skilled in the computer software art.

Examples of computer-readable media may include a hardware device specially configured to store and execute program instructions, such as a ROM, RAM, flash memory, or the like. Examples of program instructions may include machine language code, which may be created by a compiler, and also high-level language code which may be executed by a computer using an interpreter. The above-described hardware device may be configured to operate with at least one software module to perform operations of the present disclosure, and vice versa.

An aspect of the present disclosure relates to a rotor assembly and air mobility which may, even if a failure in a drive unit for controlling a pitch of a blade, ensure stability by maintaining the pitch angle of the blade.

According to an example of the present disclosure, a rotor assembly includes a main shaft; at least one blade disposed along a side (e.g., circumference) of the main shaft; a swash plate unit disposed to be penetrated by the main shaft, connected to at least one of the blades, and configured to move along the main shaft; and a drive unit configured to control a position of the swash plate unit, wherein the swash plate unit and the drive unit are connected to each other by a non-back drive part which does not allow force to be transferred to the drive unit.

A pitch of the blade may be adjusted depending on a position of the swash plate unit.

The pitch may be an angle of rotation about a length-direction shaft of the blade.

The swash plate unit may include a first plate, and a second plate disposed below the first plate and configured to support the first plate.

One end may be connected to the first plate, and the other end includes a blade link connected to the blade.

The first plate may be coupled to the blade and may rotate together with the main shaft and the blade.

The second plate may be coupled to the drive unit, and a position thereof on the main shaft may be adjusted together with the first plate by the drive unit.

The drive unit may include a motor configured to generate driving force through electrical energy; and a control link having one end coupled to the second plate and the other end connected to the motor.

The non-back drive part may include a worm coupled to the drive unit and configured to transfer driving force; and a worm gear disposed between the control link and the worm and having a shape corresponding to the worm.

The non-back drive part may further include a gear link having a predetermined length, and having one end connected to the control link and the other end rotating by being coupled to the worm gear.

According to another example of the present disclosure, a rotor assembly includes a main shaft configured to rotate around a first axis; blades disposed along a circumference of the main shaft, and configured to rotate around the first axis together with the main shaft and to rotate around a second axis different from the first axis; a drive unit configured to provide power to allow the blades to rotate around the second axis; and a swash plate unit configured to connect the blades to the drive unit and to move along the main shaft, wherein the drive unit is connected to the swash plate unit through a non-back drive part which does not allow force to be transferred to the drive unit.

A direction of the second axis may be a length direction of the blade.

Two or more drive units may be provided, and each of the drive units may be connected to the swash plate unit and adjust a position and an angle of the swash plate unit.

The swash plate unit may include a first plate connected to the blade and rotating; and a second plate configured to support the first plate and to rotate by being connected to the drive unit.

The rotor assembly may further include a blade hub disposed on one end of the main shaft and connecting the blade to the main shaft; and a first auxiliary link disposed between the blade hub and the first plate.

The first auxiliary link may include two links, an angle of the link may be adjusted by a distance between the blade hub and the first plate, and the link may connect the blade hub to the first plate.

The rotor assembly may further include a non-rotating portion separated from the main shaft and configured to not rotate; and a second auxiliary link disposed between a portion of the non-rotating portion and the second plate.

According to another example of the present disclosure, air mobility may include a rotor assembly described above.

According to the aforementioned examples, as the rotor assembly may adjust the pitch of the blade through the non-back drive part, even if a failure occurs in the drive unit driven by electric energy, the angles of the blades may be maintained to be constant such that thrust generated through the blade may be maintained to be constant, which may improve stability.

Also, or alternatively, the rotor assembly may adjust the pitch of the blade through a non-back drive part, thereby blocking external force transferred to the drive unit through the blade, and maintaining the pitch angle without additional output.

The effect of the present disclosure is not limited to the above-described effect, and a person skilled in the art will understand that other effects not mentioned may be derived from the configurations used in the specification and drawings.

While the examples have been illustrated and described above, it will be apparent to those skilled in the art that modifications and variations could be manufactured without departing from the scope of the present disclosure as defined by the appended claims.

For example, further embodiments of the invention are as follows:

According to a 1st further embodiment, there is provided a rotor assembly, comprising: a main shaft configured to rotate around a first axis; blades disposed along a side of the main shaft, wherein each blade of the blades is configured to: rotate around the first axis based on rotation of the main shaft, and rotate around a second axis, of the blade, different from the first axis; a drive configured to provide power to cause the blades to rotate around the second axis; and at least one swash plate connecting the blades to the drive and configured to move along the main shaft, wherein the drive is connected to at least one of the at least one swash plate via a non-back drive part configured to not transfer force from the at least one of the at least one swash plate to the drive.

According to 2nd further embodiment, there is provided the rotor assembly of the 1st further embodiment, wherein, for each blade of the blades, a direction of the second axis is a longitudinal direction of the blade.

According to a 3rd further embodiment, there is provided the rotor assembly of the 1st or 2nd further embodiment, wherein two or more drives are provided, and each of the drives is connected to a swash plate of the at least one swash plate and is configured to adjust a position and an angle of the swash plate.

According to a 4th further embodiment, there is provided the rotor assembly of anyone of the 1st-3rd further embodiments, wherein the at least one swash plate comprises: a first plate connected to the blades and configured to rotate; and a second plate configured to support the first plate and to rotate based on being connected to the drive.

According to a 5th further embodiment, there is provided the rotor assembly of the 4th further embodiment, further comprising: a blade hub disposed on one end of the main shaft and connecting the blades to the main shaft; and a first auxiliary link disposed between the blade hub and the first plate.

According to a 6th further embodiment, there is provided the rotor assembly of the 5th further embodiment, wherein: the first auxiliary link comprises two links, an angle between the two links is adjusted by a distance between the blade hub and the first plate, and the first auxiliary link connects the blade hub to the first plate.

According to a 7th further embodiment, there is provided the rotor assembly of anyone of the 4th to 6th further embodiments, further comprising: a non-rotating portion separated from the main shaft and configured to not rotate relative to an aircraft if the rotor assembly is installed in an aircraft; and a second auxiliary link disposed between a portion of the non-rotating portion and the second plate.

## Claims

1. A rotor assembly, comprising:
a main shaft;
at least one blade disposed along a side of the main shaft;
at least one swash plate disposed to be penetrated by the main shaft, connected to at least one of the at least one blade, and configured to move along the main shaft; and
a drive configured to control a position of the swash plate,
wherein the at least one swash plate and the drive are connected to each other by a non-back drive part configured to not transfer force from the swash plate to the drive.

2. The rotor assembly of claim 1, wherein a pitch of the blade is configured to be adjusted based on a position of the at least one swash plate,
wherein the pitch is based on an angle of rotation about a length-direction shaft of the blade.

3. The rotor assembly of anyone of claim 1-2, wherein the at least one swash plate comprises:
a first plate, and
a second plate disposed below the first plate and configured to support the first plate.

4. The rotor assembly of claim 3, wherein the rotor assembly further comprises a blade link,
wherein a first end of the blade link is connected to the first plate, and a second end of the blade link is connected to the blade.

5. The rotor assembly of anyone of claims 3-4, wherein the first plate is coupled to the blade and is configured to rotate together with the main shaft and the blade.

6. The rotor assembly of anyone of claims 3-5, wherein:
the second plate is coupled to the drive, and
the drive is configured to adjust a position of the second plate on the main shaft with a position of the first plate.

7. The rotor assembly of anyone of claims 3-6, wherein the drive comprises:
a motor configured to generate driving force by electrical energy; and
a control link having a first end coupled to the second plate and a second end connected to the motor.

8. The rotor assembly of claim 7, wherein the non-back drive part comprises:
a worm coupled to the drive and configured to transfer the driving force; and
a worm gear, disposed between the control link and the worm, having a shape corresponding to the worm.
